# EUROPEAN PATENT APPLICATION

(11) **EP 1 813 900 A2**
(43) Date of publication of application: **01.08.2007**
(21) Application number: 07101427.8
(22) Date of filing: 30.01.2007
(51) Int. Cl.: F28D 1/04, F28D 7/00, F28D 7/10, B60H 1/32

(54) **Cooling unit**

(30) Priority: 31.01.2006 DE 102006004414
(71) Applicant: Valeo Klimasysteme GmbH, 96476 Rodach (DE)
(72) Inventor: Haussmann, Roland, 69168 Wiesloch (DE); Wittmann, Klaus, 96450 Coburg (DE); Gesell, Bodo, 64850 Schaafeim (DE)
(74) Representative: Léveillé, Christophe

(57) **Abstract**

The present invention relates to a motor vehicle air conditioning system and a motor vehicle air conditioning system with a thermodynamic primary circuit (400) that as a heat sink has an evaporator (10) and an inlet/outlet line (213,313) to/from the evaporator, and with a secondary cooling circuit (410) for the cooling of electrical aggregates or electronic elements (416,418), whereby the secondary cooling circuit comprises a heat exchanger (2,2a,2b,102,202,302) that is in thermoconductive contact with the heat sink of the primary circuit.

## Description

The present invention relates to a motor vehicle air conditioning system with a thermodynamic primary circuit and with a secondary cooling circuit for the cooling of electrical aggregates or electronic elements that is in thermoconductive contact with the heat sink of the primary circuit. In particular the invention relates to a heat exchanger of the secondary cooling circuit that is in full-surface thermoconductive contact with the heat sink.

The widespread use of powerful electronic components and/or constructional elements such as e.g. electronic controllers or microprocessors in modern motor vehicles demands efficient cooling of these components in order to ensure as problem-free and malfunction-free operation as possible. As these components are becoming more and more numerous, more powerful and larger, and are also indispensable for the operation of a modern motor vehicle, simple cooling with ambient air is no longer sufficient. This applies in particular for a reliable use of the electronic components in warm or hot climatic conditions.

Cooling systems were therefore developed that permit an efficient cooling of the electronic components for example by means of a coolant, whereby the electronic components are exposed to the coolant in a suitable manner, e.g. by means of a separate cooling circuit.

Systems are also known in which a separate refrigerant circuit with dedicated compressor and evaporator is used to draw heat from the circuit. This involves considerable additional design work and cost. A further coolant circuit, generally a water/glycol circuit, can also be present that is in thermoconductive contact with the electronics, further increasing the design work and cost.

Systems are also used in which the refrigerant circuit for cooling the electronic components is integrated in parallel or in series connection into the refrigerant circuit of a motor vehicle air conditioning system. However, these systems have the disadvantage that an efficient cooling of the electronic components is only possible when the air conditioning system of the motor vehicle is switched on, whereby here again a great deal of design work and cost are involved due to the additional parallel refrigerant circuit and the additional refrigerant/coolant heat exchanger.

In addition there are also systems in which the electronic components are cooled by means of the motor vehicle cooling circuit which, however, even in the low temperature operating mode has relatively high temperatures (50-70°C) and hence only a low cooling capacity.

In order to overcome these disadvantages, a cooling system for the cooling of electronic components and/or constructional elements in motor vehicles would therefore be desirable that has a dedicated separate cooling circuit that can be thermally connected as effectively as possible to the refrigerant circuit of a conventional air conditioning system, and that also provides an adequate cooling capacity when the air conditioning system is switched off, e.g. during winter operation. Furthermore, such a cooling system should require only a small number of necessary components, and in particular avoid the use of cost-intensive components such as compressors or evaporators.

In order to achieve this object, the invention proposes a heat exchanger of a secondary cooling circuit for the cooling of electrical aggregates or electronic elements in a motor vehicle, whereby the heat exchanger can be brought into full-surface thermoconductive contact with a heat sink of a thermodynamic primary circuit with at least one evaporator.

In order to achieve the object described above, the invention furthermore proposes a motor vehicle air conditioning system with a thermodynamic primary circuit having an evaporator as heat sink and an inlet/ outlet line to/from the evaporator, and with a secondary cooling circuit for the cooling of electrical aggregates or electronic elements, whereby the secondary cooling circuit comprises a heat exchanger as described above that is in thermoconductive contact with the heat sink of the primary circuit.

The thermodynamic primary circuit can thereby be the refrigerant circuit of an air conditioning system such as is normally used in motor vehicles and such as forms part of the standard equipment of many modern and normal motor vehicles. It can, however, also be a refrigerant circuit developed specially for the invention or modified for this purpose. Particularly important here is the heat sink of the primary circuit, in other words all the elements of the primary circuit with a temperature lower than that of the environment, in particular the evaporator and its inlet and outlet lines. It can, however, also include connecting parts, such as e.g. sleeves or flanges. In addition, the heat sink can comprise special elements, for example for receiving the heat exchanger or its mounting elements. The evaporator and/or the inlet and outlet lines can be elements here that are normally used in motor vehicles, but also elements developed, designed or modified specially for the invention, in particular for creation of the thermoconductive contact.

The secondary cooling circuit thereby has a separate coolant circuit for the cooling of electrical aggregates and/or electronic components, such as for example microprocessors or electronic controllers for electric functions of the motor vehicle, for example engine controllers, sensor monitors, function controllers of driver assistance systems, etc. The secondary cooling circuit can furthermore be used in principle for the cooling of any devices in the motor vehicle, e.g. for the cooling of motor vehicle seats, cool boxes or similar items. Heat is thereby drawn from the secondary cooling circuit at least at the heat exchanger that is in thermoconductive contact with the heat sink. The thermoconductive contact can thereby be a thermoconductive connection between the heat sink and the heat exchanger.

The secondary cooling circuit thereby functions independently of the primary circuit, and in a second operating mode, when for example the air conditioning system and the primary circuit are switched off and the air conditioning system is not required for cooling the passenger compartment, e.g. during winter operation at low ambient temperatures, can be cooled with ambient air. For example, an air current can be supplied to the evaporator by means of a fan that cools the evaporator by means of ambient air, and hence cools the secondary circuit via the thermoconductive contact.

According to a special embodiment of the invention, the thermoconductive contact can thereby be a non-positive and/or positive connection between the heat exchanger and the heat sink. The heat exchanger can thereby have a surface formed to correspond to a surface of the heat sink in order to provide the largest possible contact surface area. The two surfaces can thereby be pressed against one another in order to increase the contact surface area, for example, by means of a screw connection, riveted and/or bonded connection or similar means of joining.

According to a further special embodiment of the invention, the heat exchanger is bonded to the heat sink in creating the thermoconductive contact, in particular soldered and/or welded. This provides a permanent joint with a good thermal conductivity.

According to a further embodiment, the thermoconductive contact is a metallic contact. Here the good thermal conductivities of metals are employed to provide a heat exchange between the heat sink and the heat exchanger of the secondary cooling circuit. On the side of the heat sink this can be a surface of the heat sink, for example the aluminium surface of a normal evaporator or the metal surface of its inlet and outlet lines that is in contact with at least one metallic surface of the heat exchanger. The metallic surface of the heat exchanger can thereby comprise commercially available sheet metal, aluminium or other metals with a high thermal conductivity, for example copper or alloys.

According to a further embodiment, the thermoconductive contact has a thermal resistance R of less than 0.0015 m²K/W, preferably of less than 0.001 m²K/W. The thermal resistance R of less than 0.0015 m²K/W provides a thermal conductivity of the thermoconductive contact that ensures an effective and efficient cooling of the secondary cooling circuit and hence a reliable cooling function for the electronic elements and components. The thermoconductive contact can thereby be a metallic contact, as described above, or be made of some other material with high thermal conductivity, for example a ceramic material.

In a special embodiment of the invention, the heat exchanger is connected to the heat sink in one piece and/or is integrated into the latter. The heat exchanger can thereby comprise, for example, a tubular element that is integrated into the inlet and/or outlet line of the evaporator. In another variant the heat exchanger and the evaporator can, for example, be combined in a single constructional element, i.e. an evaporator, for example of aluminium or an aluminium alloy, and additionally has a tubular system through which the coolant of the secondary cooling circuit is transported and in which it is cooled.

In a further special embodiment of the invention, the heat exchanger and the thermoconductive contact are arranged on at least one lateral surface of the evaporator. The surface of the heat exchanger that can be brought into thermoconductive contact can thereby be planar and the heat exchanger can thereby be located or arranged on one outer side of the evaporator. In a special embodiment, the heat exchanger can additionally comprise separable connecting means on the lateral surfaces and be reversibly attachable to the evaporator to allow for simple installation and/or also a later inexpensive installation on an evaporator already integrated into a motor vehicle and/or to also permit a simple removal in the event of a repair. The thermoconductive contact can thereby be made, for example, on an essentially smooth surface of the evaporator with an also smooth surface of the heat exchanger, thereby permitting e.g. universal use of the heat exchanger with different evaporator models. On the other hand the surface form of the heat exchanger can also be adapted to a surface of an evaporator and thus permit special arrangements of the thermoconductive contact.

In a further special embodiment the heat exchanger can also have a surface distinct from the thermoconductive contact that can be cooled by an air current. The heat exchanger can thus be cooled even when, for example, during winter operation the air conditioning system and hence the primary circuit is switched off.

In another special embodiment of the invention, the heat exchanger is in thermoconductive contact with the evaporator via at least two distinct surfaces, in particular via opposite surfaces of the heat exchanger. The heat exchanger can thereby be formed, for example, in such a way that it can be installed in the evaporator, for example instead of cooling fins of the evaporator. The use of two distinct thermoconductive contact surfaces advantageously increases the efficiency of the heat exchanger so that the cooling capacity of the secondary cooling circuit is increased or, if this is not necessary, the heat exchanger can be designed correspondingly smaller. Furthermore, if the heat exchanger is arranged inside the evaporator, it requires no additional space in the motor vehicle. The heat exchanger can thereby be permanently attached to the evaporator or can be subsequently integrated into the latter.

In a further embodiment of the invention, at least one part of the thermoconductive contact is arranged radially around the inlet and/or outlet line of the evaporator. The heat exchanger can thereby be arranged, for example, in an annular form around the line or have a tube-like opening through which the line or lines of the evaporator are laid. At least one section of the surface that can be brought into thermoconductive contact is thereby dimensioned such that it can be arranged radially around the inlet and outlet line of the evaporator. The coolant thereby advantageously flows into the secondary cooling circuit in the opposite direction to the coolant in the primary circuit in order to provide an efficient heat exchange. The outlet and inlet lines can thereby be arranged on the evaporator in such a way, for example, that the air flowing through the evaporator flows around them. The inlet and outlet lines with the heat exchanger are thereby preferably arranged hydraulically upline of the evaporator.

According to a further preferred embodiment of the invention, the heat exchanger comprises at least one section that can be exposed to the ambient air, in particular with an enlarged surface area and/or cooling fins. The surface can thereby be formed with the largest possible area and additionally comprise cooling fins. A heat exchange with the environment is thus made possible and the cooling capacity of the secondary cooling circuit ensured when the air conditioning system of the motor vehicle is switched off, for example during winter operation when it is not required for cooling the passenger compartment. The section that can be exposed to the ambient air can thereby be arranged in the air current of the motor vehicle air conditioning system that is driven, for example, by a fan. The arrangement can thereby be in the air current upline or downline of the evaporator or even parallel to it.

Further features and advantages of the invention become more obvious when reading the following description of preferred embodiments that are given merely as examples and are not intended as limitations. Reference is thereby made to the attached drawings in which:
Figure 1 shows diagrammatically the configuration of an air conditioning system according to the invention with a thermodynamic primary circuit and with a secondary cooling circuit that is in thermoconductive contact with a heat sink of the primary circuit;
Figure 2a shows an evaporator with two heat exchangers arranged laterally on both sides, each of which has a thermoconductive contact;
Figure 2b shows a detail view of the thermoconductive contact between evaporator and heat exchangers from Figure 2a along the sectional axis A-A;
Figures 3a and 3b show a detail view of a further embodiment of the thermoconductive contact between evaporator and heat exchangers from Figure 2a along the sectional axis B-B and its attachment to the evaporator;
Figure 4 shows a detail view of a further embodiment of the invention in which the heat exchanger is in thermoconductive contact with the evaporator with two distinct surfaces;
Figure 5 shows a detail view of a heat exchanger as in Figure 4;
Figures 6a and 6b show further embodiments of the invention in which the heat exchanger and the thermoconductive contact are arranged radially around the outlet line of the evaporator; and
Figure 7 shows a cross section through the heat exchanger and the outlet line of the evaporator with thermoconductive contact along the line C-C from Figure 6a.

In the figures and the following description of special embodiments, identical or similar parts are referred to with the same reference numbers.

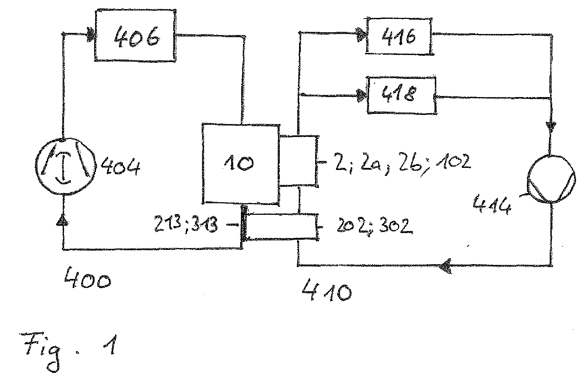

The air conditioning system with secondary cooling circuit shown diagrammatically in Figure 1 comprises a commercially available air conditioning system consisting of a thermodynamic primary circuit 400 with a compressor 404, a condenser 406, and an evaporator 10 and an outlet line 213, 313 from the evaporator, as is commonly used in motor vehicles. Furthermore, the primary circuit can comprise further components, such as for example expansion tanks, shut-off and injection valves (not illustrated) or similar elements.

In addition the motor vehicle air conditioning system comprises a secondary cooling circuit 410 for the cooling of electrical aggregates or electronic elements 416, 418. The coolant circuit can thereby be a water/ glycol circuit that is in direct thermoconductive contact with the cooling surfaces of the electronics. The electrical aggregates or electronic elements 416, 418 can thereby be any kind of electronic controllers and/or microprocessors or other electronic elements, for example an electronic engine controller, a central electronic motor vehicle control unit or an electronic controller of an air conditioning system. The secondary cooling circuit 410 can comprise a large number of different electrical aggregates or electronic elements 416, 418 to be cooled which, as illustrated, can be arranged in parallel, but also in series or even in a combination of series and parallel connection.

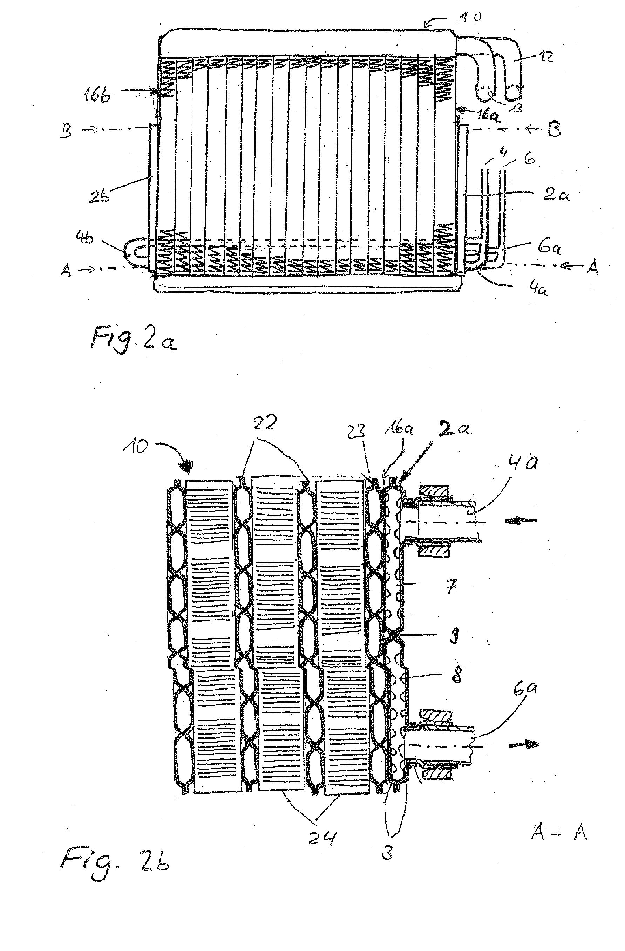

The secondary cooling circuit 410 is thereby operated, for example, by means of a pump 414 and has a heat exchanger 2, 2a, 2b, 102 that is in thermoconductive contact with the evaporator 10 as heat sink and which is cooled by the latter. The secondary cooling circuit 410 also has a heat exchanger 202, 302 that is in thermoconductive contact with the outlet line 213, 313 of the evaporator 10 as heat sink and which is cooled by the latter. For the person skilled in the art it is thereby obvious that only one of the heat exchangers can be used in each case. Special embodiments and arrangements of the heat exchangers, of the thermoconductive contact, and of the evaporator and its inlet and outlet lines are described in detail below by reference to Figures 2 to 7.

In a first operating mode when the motor vehicle air conditioning system is switched on, for example in summer mode, the secondary cooling circuit 410 illustrated in Figure 1 is cooled at least via the heat exchanger 2, 2a, 2b, 102 or 202, 203 and the respective thermoconductive contact by the evaporator 10 or by the outlet line 213, 313 of the evaporator. In addition, an air current can flow around the heat exchanger to draw additional heat from the latter. If the motor vehicle air conditioning system is switched off, for example in winter mode when it is not required for cooling the passenger compartment, the air current is used alone in a second operating mode for cooling of the secondary cooling circuit, in particular due to the colder ambient temperatures. In another embodiment, an air current flowing through the evaporator 10 can also draw heat from the latter, and hence from the heat exchanger 2, 2a, 2b; 102 via the thermoconductive contact when the air conditioning system is switched off in winter mode.

Figure 2a shows an evaporator 10 of an air conditioning system for a motor vehicle according to the invention comprising inlet and outlet lines 12, 13 for the evaporator 10 to further components of a refrigerant circuit or primary circuit of a motor vehicle (not illustrated), and heat exchangers 2a, 2b arranged on the lateral side surfaces of the evaporator 16a, 16b that are connected via inlet lines 4, 4a, 4b and outlet lines 6, 6a to the secondary cooling circuit. Further elements of the secondary cooling circuit are, for example, a pump and components to be cooled such as electronic elements (not illustrated). The heat exchangers 2a, 2b thereby lie in full-surface contact with the lateral surfaces 16a and 16b of the evaporator 10 and thus form a thermoconductive contact.

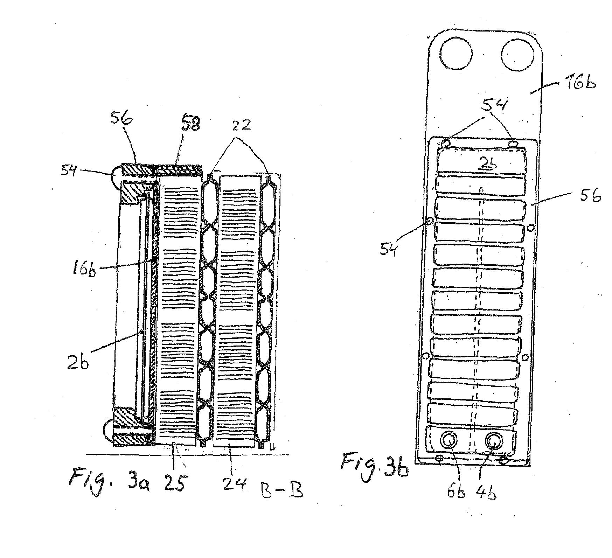

Figure 2b shows a detail of the evaporator 10 from Figure 2a along the sectional line A-A through the heat exchanger 2a and a part of the evaporator 10. Between refrigerant-bearing cooling plates 22, 23 are cooling fins 24. Arranged on the lateral outer side 16a of the outer cooling plate 23 is the heat exchanger 2a. The heat exchanger has a housing 3 made from thermoconductive material, such as for example metal, in particular aluminium and/or aluminium alloys, that forms coolant chambers 7, 8 that are separated by a partition wall 9. The coolant enters the coolant chamber 7 via the inlet line 4a, is then transferred from here in another plane (not illustrated) into chamber 8 and then via the outlet line 6a to further components of the secondary cooling circuit. The housing 3 of the heat exchanger 2a is thereby in contact with the lateral outer side 16a of the cooling plate 23 of the evaporator and thus forms the thermoconductive contact. In order to ensure the thermoconductive contact, the heat exchanger can thereby, for example, be welded or soldered to the evaporator or attached in some other way, e.g. as described with reference to Figures 3a and 3b.

Figure 3a shows a section along the line B-B from Figure 2a of a further variant of the arrangement of a heat exchanger 2b on the lateral side 16b of the evaporator 10 of a motor vehicle air conditioning system. The evaporator 10 has cooling fins 25 that are in contact on one side with a refrigerant-bearing cooling plate 22 and are cooled by the latter, and are limited on the other side by the lateral outer side 16b of the evaporator. The heat exchanger 2b is arranged in contact with the outer side 16b that forms a thermoconductive contact with the latter. The heat exchanger can have a cross section as illustrated and described in Figure 2b.

The lateral outer side 16b can, for example, be an aluminium plate that is soldered to the cooling fins 25.

In this variant the heat exchanger 2b is attached to the evaporator 10 with an attachment device 56 and connected non-positively to the evaporator by means of screws and/or rivets 54. The heat exchanger is thus held against the evaporator so that the thermoconductive contact is formed and ensured. Figure 3b shows a view from above of this arrangement. The attachment device 56 is attached to the lateral section 16b of the evaporator with a large number of screws and/or rivets 54 in order to ensure a non-positive and positive contact surface. In addition, the inlet line 4b and the outlet line 6b of the heat exchanger 3b are shown. The attachment device 56 can thereby be made of metal or of another material with good thermoconductive properties in order to support the heat exchange. For this purpose it can also have a guide 58 that on the one hand increases the contact surface area with the evaporator, and on the other hand permits a form, positive and easily achieved positioning of the heat exchanger. The attachment device 56 is thereby particularly advantageous for a simple and inexpensive subsequent installation of the heat exchanger with secondary cooling circuit and for simple removal in the event of a repair. A suitable forming of the attachment device allows the heat exchanger to be connected also to already existing evaporators without these having to be modified or their design changed. At the same time the attachment device 56 allows the air volume flowing through the cooling fin 25 to be reduced so that a greater volume of heat can be drawn from the heat exchanger 26.

It goes without saying that the two variants for the forming of the thermoconductive contact described in reference to Figures 2 and 3 are only exemplary and that, for example, mixed forms are possible, and/or that one of the two variants is used on both sides of the evaporator.

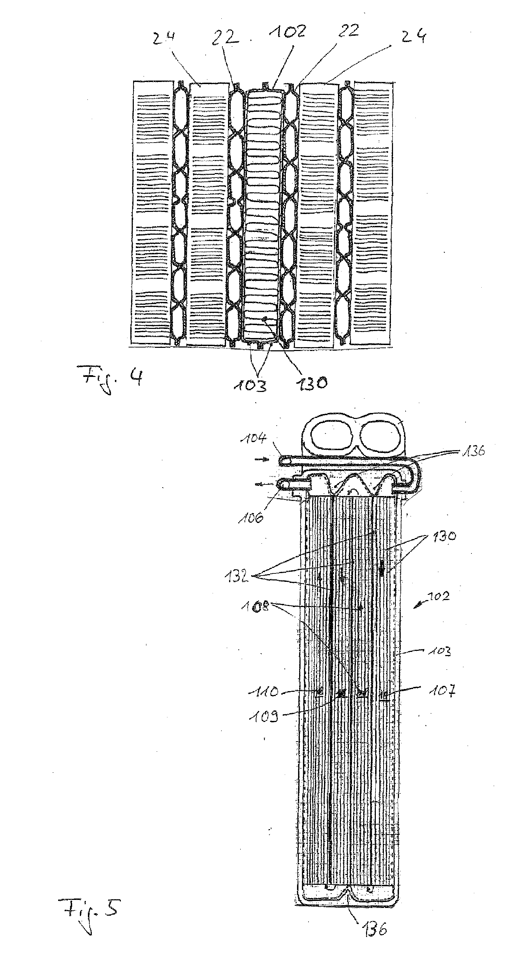

Figure 4 shows a further embodiment of the invention in which a heat exchanger 102 is in thermoconductive contact with an evaporator with two distinct surfaces. The heat exchanger 102 is thereby arranged between two cooling plates 22 and limited by these. The heat exchanger 102 has a housing 103 of a thermoconductive material, e.g. of aluminium or similar material, that is in thermoconductive contact with the refrigerant-bearing cooling plates 22 that are also made of a thermoconductive material, e.g. of aluminium or its alloys or similar material. The heat exchanger 102 can have the same dimensions as the cooling fins 24, so that the cooling fins 24 can be replaced by a heat exchanger at a point between two refrigerant-bearing cooling plates 22, as illustrated in Figure 4. By the limitation on both sides with cooling plates, this arrangement doubles the surface area of the thermoconductive contact of a heat exchanger with the evaporator, resulting in a better and more efficient heat exchange and hence increases the performance of the secondary cooling circuit. If the cooling capacity is sufficient, the heat exchanger can if necessary also be designed correspondingly smaller. In order to increase the cooling capacity, cooling fins 130 can be arranged inside the heat exchanger.

Figure 5 shows a detail view of a heat exchanger 102 as shown in Figure 4 and its arrangement in the evaporator as described in reference to Figure 4. The heat exchanger has a coolant inlet line 104 and a coolant outlet line 106 with which the heat exchanger is connected to further components of the secondary cooling circuit. The coolant flow is thereby directed from the inlet line 104 by means of fluid baffle plates 136 in turn into the coolant chambers 107, 108, 109 and 110 that are separated by partition walls 132. This extends the coolant flow path through the heat exchanger, resulting in an increase in the heat given off. To further increase the heat exchange, further cooling fins 130 are arranged in the coolant chambers 107, 108, 109 and 110 that are in thermoconductive contact with the housing 103 of the heat exchanger. The housing 103 is thereby formed such that it can be installed between the cooling plates 22 from Figure 4, whereby it is in positive contact with the latter to form a thermoconductive contact. For this it can, for example, be pressed between the cooling plates and/or welded and/or soldered to these or connected in some other way.

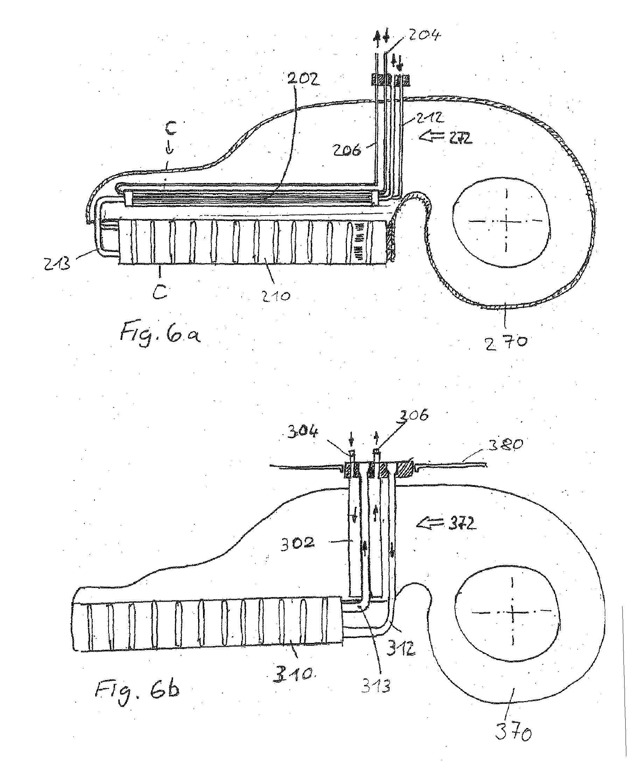

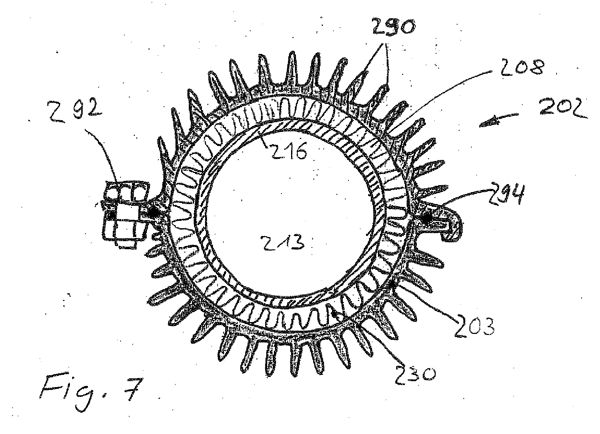

A further preferred embodiment of the invention is shown in two variants in Figures 6a and 6b. Figure 6a shows part of a motor vehicle air conditioning system with a fan 270 that creates an air current 272 that is cooled in the evaporator 210 when the air conditioning system of the motor vehicle is in operation. The inlet and outlet lines 212, 213 of the evaporator are arranged hydraulically upline of the evaporator in the air current 272. Arranged radially around the outlet line 213 of the evaporator is a heat exchanger 202 that is connected via the inlet and outlet lines 204 and 206 to the further components of the secondary cooling circuit (not illustrated). The heat exchanger 202 is thereby arranged in such a way that in the heat exchanger, the coolant of the primary circuit flows through the outlet line 213 in the opposite direction to the flow direction of the coolant in the secondary cooling circuit, resulting in a more efficient heat exchange. Furthermore the heat exchanger 202 is arranged hydraulically in the air current 272 immediately upline of the evaporator 210, so that the heat exchanger is exposed to the air current over its whole length. As a result, the heat exchanger is cooled by the fresh air current 272 even when the primary circuit is switched off, e.g. in winter mode when the air conditioning system is not required for cooling of the passenger compartment. One example of a possible cross section of the heat exchanger 202, e.g. along the axis C-C, is shown in Figure 7 and described further below.

Figure 6b shows a variant of the embodiment from Figure 6a with a fan 370 that creates an air current 372 which is cooled in the evaporator 310. By analogy with Figure 6a, a heat exchanger 302 is arranged around the outlet line 313 of the evaporator. In the variant shown in Figure 6b, the heat exchanger is additionally connected to a baffle plate or other attachment device 380 and can, for example, be supported by this. In addition, the inlet and outlet lines 312 and 313 of the primary circuit and also the inlet and outlet lines 304 and 306 of the secondary cooling circuit can be laid shorter and hence at less expense with this arrangement. The heat exchanger 302 is nevertheless located in the air current 372 and is cooled thereby even when the air conditioning system is switched off.

Figure 7 shows the cross section of a heat exchanger as can be used, for example, in an arrangement according to Figure 6a or by analogy also according to Figure 6b. The heat exchanger has an inner tube 216 that can be a section of the outlet line 213 of the evaporator 210 from Figure 6a and that is preferably made of a thermoconductive material, for example aluminium or copper. This creates a thermoconductive contact with the coolant chamber 208 of the secondary cooling circuit located radially outside the tube 216. The coolant chamber 208 has cooling fins 230 that are in contact with the housing 203 of the heat exchanger and the tube 216, and hence increase the contact surface area of the heat exchanger with the coolant of the secondary cooling circuit. For efficient cooling of the secondary cooling circuit, the housing 203 also has cooling fins 290 that are exposed to the air current 272 created by the fan 270. In the illustrated embodiment, the housing 203 is constructed in two pieces and is arranged around the tube 216 by means of an engagement connection 294 on the one hand and a screw connection 292 on the other hand. It goes without saying that the connection can also be made with other known connecting elements and/or techniques, e.g. hinges, rivet and/or snapper connections.

## Claims

1. Heat exchanger (2, 2a, 2b; 102; 202; 302) of a secondary cooling circuit for the cooling of electrical aggregates or electronic elements in a motor vehicle, whereby the heat exchanger can be brought into full-surface thermoconductive contact with a heat sink of a thermodynamic primary circuit with at least one evaporator

2. Heat exchanger according to Claim 1, whereby the surface that can be brought into thermoconductive contact is planar and can be arranged on at least one lateral surface (16a, 16b) of the evaporator (10).

3. Heat exchanger according to Claim 2, whereby the heat exchanger comprises separable connecting means on the lateral surfaces and can be reversibly attached.

4. Heat exchanger according to Claim 2 or 3, whereby the heat exchanger has a surface distinct from the thermoconductive contact that can be cooled by an air current.

5. Heat exchanger according to Claim 1, whereby the surface that can be brought into thermoconductive contact comprises at least two planar surface sections and the heat exchanger (102) is designed such that it can be arranged on and/or in the evaporator with at least two distinct surface sections, in particular opposite surface sections, of the heat exchanger.

6. Heat exchanger according to Claim 1, whereby the surface that can be brought into thermoconductive contact is a curved or tubular surface and the heat exchanger is designed such that it can be arranged on a section of an inlet and outlet line of the evaporator.

7. Heat exchanger according to Claim 6, whereby at least one section of the surface that can be brought into thermoconductive contact is dimensioned such that it can be arranged radially around the inlet and outlet lines (213, 313) of the evaporator.

8. Heat exchanger according to Claim 6 or 7, whereby the heat exchanger has cooling fins that are arranged radial outwards around the heat exchanger.

9. Heat exchanger according to one of the preceding claims, whereby the surface that can be brought into thermoconductive contact is dimensioned and configured such that the heat exchanger can be connected non-positively and/or positively to the heat sink.

10. Heat exchanger according to one of the preceding claims in which the heat exchanger can be connected by bonding, in particular soldered and/or welded, in creating the thermoconductive contact with the heat sink.

11. Heat exchanger according to one of the preceding claims in which the surface that can be brought into thermoconductive contact comprises a metallic material.

12. Heat exchanger according to one of the preceding claims in which the heat exchanger can be arranged and configured on the heat sink in such a way that the thermoconductive contact has a thermal resistance of R < 0.0015 m²K/W, in particular of R <0.001 m²K/W.

13. Heat exchanger according to one of the preceding claims in which the heat exchanger is connected to the heat sink in one piece and/or is integrated into the latter.

14. Heat exchanger according to one of the preceding claims in which the heat exchanger comprises at least one section that can be exposed to the ambient air, in particular with an enlarged surface area and/or cooling fins.

15. Evaporator for a motor vehicle air conditioning system to which a heat exchanger according to one of Claims 1 to 14 is assigned.

16. Evaporator for a motor vehicle air conditioning system into which a heat exchanger according to one of Claims 1 to 14 is integrated.

17. Inlet and outlet line of an evaporator of a motor vehicle air conditioning system to which a heat exchanger according to one of Claims 1 to 14 is assigned.

18. Motor vehicle air conditioning system with a thermodynamic primary circuit that has an evaporator (10; 210; 310) and an inlet and outlet line (12, 13; 212, 213; 312 313) to/from the evaporator as heat sink, and with a secondary cooling circuit for the cooling of electrical aggregates or electronic elements, whereby the secondary cooling circuit comprises a heat exchanger (2, 2a, 2b; 102; 202; 302) according to one of Claims 1 to 14 that is in thermoconductive contact with the heat sink of the primary circuit.

19. Motor vehicle air conditioning system according to Claim 18, whereby in a first operating mode the heat sink is cooled by means of the evaporator and in a second operating mode by an air current flowing around the heat sink.

20. Motor vehicle air conditioning system according to Claim 18 or 19 in which the thermoconductive contact is a non-positive and/or positive connection of the heat exchanger to the heat sink.

21. Motor vehicle air conditioning system according to one of Claims 18 to 20 in which the heat exchanger has a bonded connection, in particular soldered and/or welded, in creating the thermoconductive contact to the heat sink.

22. Motor vehicle air conditioning system according to one of Claims 18 to 21 in which the thermoconductive contact is a metallic contact.

23. Motor vehicle air conditioning system according to one of Claims 18 to 22 in which the thermoconductive contact has a thermal resistance R of R < 0.0015 m²K/W, preferably R <0.001 m²K/W.

24. Motor vehicle air conditioning system according to one of Claims 18 to 23 in which the heat exchanger is formed in one piece with the heat sink and/or is integrated into the latter.

25. Motor vehicle air conditioning system according to one of Claims 18 to 24 in which the heat exchanger (2a, 2b) and the thermoconductive contact are arranged on at least one lateral surface (16a, 16b) of the evaporator (10).

26. Motor vehicle air conditioning system according to Claim 25, whereby at least one of the lateral surfaces (16a, 16b) of the evaporator (10) is the outer wall of a lateral cooling plate (23), whereby the cooling plate with can be exposed to refrigerant.

27. Motor vehicle air conditioning system according to one of Claims 18 to 24 in which the heat exchanger (102) is in thermoconductive contact with the evaporator via at least two distinct surfaces, in particular via opposite surfaces of the heat exchanger.

28. Motor vehicle air conditioning system according to Claim 27, whereby the distinct surfaces are in thermoconductive contact with cooling plates 22 and the cooling plates can be exposed to refrigerant.

29. Motor vehicle air conditioning system according to one of Claims 18 to 28 in which at least one section of the thermoconductive contact is arranged radially around the inlet and outlet lines (213; 313) of the evaporator.

30. Motor vehicle air conditioning system according to Claim 29, whereby the section of the thermoconductive contact arranged radially around the inlet and outlet lines (213; 313) is arranged in an air current flowing through the evaporator, in particular arranged hydraulically upline of the evaporator.

31. Motor vehicle air conditioning system according to one of Claims 18 to 30 in which the heat exchanger comprises at least one section that can be exposed to the ambient air, in particular with an enlarged surface area and/or cooling fins.
